# FASCICULE DE BREVET EUROPEEN

(11) **EP 3 478 945 B1**
(45) Date de publication et mention de la délivrance du brevet: **11.08.2021**
(21) Numéro de dépôt: 17735215.0
(22) Date de dépôt: 15.06.2017
(51) Int. Cl.: F01M 9/10, F16N 7/36, F01L 1/047, F01L 1/08, F01L 1/18

(54) **LUBRIFICATION DU DOS DES CAMES PAR RÉCUPÉRATION D'HUILE**
SCHMIERUNG VON NOCKENRÜCKEN DURCH ÖLRÜCKGEWINNUNG
LUBRICATION OF BACKS OF CAMS BY OIL RECOVERY

(30) Priorité: 04.07.2016 FR 1656349
(43) Date de publication de la demande: 08.05.2019
(73) Titulaire: Renault S.A.S., 92100 Boulogne-Billancourt (FR); Nissan Motor Co., Ltd., Yokohama-shi, Kanagawa 221-0023 (JP)
(72) Inventeur: MOULIN, Jean-François, 92800 Puteaux (FR); DE MALET, Etienne, 78000 Versailles (FR); FOREAU-JOHAN, Sylvie, 92380 Garches (FR)
(74) Mandataire: Rougemont, Bernard
(86) Numéro de dépôt international: PCT/FR2017/051555
(87) Numéro de publication internationale: WO 2018/007706

(56) Documents cités:
- CN-U- 204 552 856
- DE-A1- 3 935 154
- US-A1- 2002 117 020
- US-A1- 2006 249 112

## Description

### Domaine technique de l'invention

La présente invention concerne un dispositif de distribution d'un moteur thermique ou à combustion interne d'un véhicule automobile.

La présente invention concerne plus particulièrement un système de lubrification d'un dispositif d'actionnement de soupapes par un arbre à cames.

La présente invention concerne plus précisément la lubrification du contact entre une came et un linguet partie d'un dispositif d'actionnement de soupape.

### Etat de la technique

Dans les véhicules automobiles équipés de moteur à combustion interne ou thermique, des dispositifs de distribution sont installés pour permettre l'admission d'air ou de gaz frais dans une chambre d'un cylindre du moteur puis l'évacuation des gaz brulés suite à une combustion dans ladite chambre. Les dispositifs de distribution comprennent des soupapes mobiles en translation dans une culasse de moteur thermique. Une soupape est un organe mécanique de la distribution des moteurs thermiques permettant l'admission des gaz frais et l'évacuation des gaz brûlés. On distingue ainsi une soupape d'admission séparant le conduit d'admission de la chambre de combustion et une soupape d'échappement séparant ladite chambre de combustion d'un conduit d'échappement. La soupape utilisée dans le moteur de véhicule automobile est généralement une soupape à tige ou soupape à tulipe comprenant une tige prolongée à une extrémité par une tête évasée de soupape qui est apte à obturer un orifice de conduit débouchant dans la chambre à combustion.

La soupape est actionnée généralement par un arbre à cames qui est adapté à pousser sur la tige de la soupape selon l'axe de ladite tige. Pour ce faire, l'arbre à cames porte des cames qui viennent appuyer sur une extrémité libre de la tige de soupape opposée à la tête évasée, ledit arbre est entrainé en rotation autour d'un axe sensiblement orthogonal à l'axe de la tige de soupape. L'extrémité libre de la tige de soupape est donc poussée par une came fixée solidaire en rotation à l'arbre à cames, vers la chambre à combustion du cylindre pour autoriser l'ouverture du conduit d'admission d'air frais ou du conduit d'échappement ou d'évacuation des gaz brulés. La tige coulisse en effet dans la culasse vers la chambre de combustion pour ouvrir un orifice d'un conduit d'entrée d'air ou d'échappement de gaz brulés. La soupape est ensuite rappelée en position par un (ou plusieurs) ressort de rappel.

Ladite extrémité libre de la tige est généralement de section réduite et le contact entre la came et la tige de soupape peut être perturbé, ce qui est susceptible d'entrainer un dysfonctionnement du moteur thermique.

Il est connu d'augmenter ladite section de contact par exemple par l'ajout à l'extrémité libre de la tige d'un cylindre de contact solidaire de la tige et permettant de fiabiliser le contact entre la tige de soupape et la came.

Il est aussi connu de mettre en place entre la came et la tige de soupape un linguet de contact pour assurer la transmission du mouvement d'actionnement de la came sur l'extrémité libre de la tige de soupape. Ledit linguet est généralement composé d'un bras mobile en rotation autour d'un axe perpendiculaire à l'axe de déplacement de la tige de soupape et d'une tête de linguet adaptée à appuyer sur l'extrémité libre de la tige de soupape. La came dans son mouvement de rotation vient appuyer sur une partie du bras du linguet pour provoquer un déplacement en translation de la tête de linguet et donc de l'extrémité de la tige de soupape.

Il convient donc de lubrifier le contact entre ladite came et le linguet pour réduire l'usure et fiabiliser le fonctionnement des soupapes. Pour cela, il est connu de creuser des conduits de lubrification dans la culasse, dont une extrémité aval selon le sens de circulation du fluide de lubrification débouche en vis-à-vis avec le dos d'un linguet par exemple ou de la came.

La publication FR267901-A1 divulgue ainsi un dispositif de lubrification pour une came de moteur à combustion interne ; ledit dispositif comprend un conduit d'amenée d'huile connecté à une rampe d'alimentation d'huile du moteur et débouchant à la surface de la culasse par un orifice par lequel un jet d'huile est pulvérisé en direction de la came.

Un inconvénient du dispositif divulgué est la nécessité de percer un tel conduit pour une came du moteur et notamment entre les divers conduits existant dans la culasse.

Un autre inconvénient est la direction du flux d'huile pulvérisé pour atteindre la surface de contact de la came.

La publication FR2746846-B1 décrit un dispositif de lubrification comprenant une voute dans une chambre logeant un arbre à cames, ladite voute comportant des déflecteurs pour ramener de l'huile projetée depuis un canal de lubrification creusé dans l'arbre à cames vers la paroi de la chambre, vers la surface de la came.

Un inconvénient est de constituer une chambre avec des dimensions plus importantes pour agencer les déflecteurs.

Un autre inconvénient est l'efficacité du dispositif qui ne ramène pas de manière précise l'huile sur la surface de la came.

CN204552856 U décrit un autre exemple de dispositif de lubrification pour une came de moteur à combustion interne.

Le but de l'invention est de remédier à ces problèmes et un des objets de l'invention est un dispositif de lubrification simple et peu onéreux apte à amener du liquide de lubrification en direction de la surface de contact de la came avec un linguet de distribution d'un dispositif d'actionnement de soupape, agencé dans une culasse de moteur thermique de véhicule automobile.

### Bref résumé de l'invention

La présente invention concerne plus particulièrement un dispositif de lubrification pour une came de moteur à combustion interne, selon la revendication 1.

De manière avantageuse, la came présente une paroi tournée vers l'orifice d'éjection de fluide lubrifiant comportant un dispositif d'acheminement apte à diriger ledit fluide depuis un pied de la came en contact avec ledit arbre jusqu'à la surface de contact de la came. Le fluide lubrifiant est ainsi amené de manière simple et précise jusqu'à la surface de contact pour lubrifier le contact entre la came et un linguet.

Selon d'autres caractéristiques,

De manière avantageuse, le dispositif d'acheminement de l'huile comporte une zone de collecte de l'huile, ce qui permet de récolter une masse d'huile importante pour l'adresser à la surface de contact de la came.

-le dispositif d'acheminement entoure l'arbre à cames.

De manière avantageuse, le dispositif d'acheminement entoure l'arbre à cames pour collecter toute l'huile déposée sur l'arbre et sur la paroi latérale.

-le dispositif d'acheminement comporte une ouverture débouchant dans la surface de contact.

De manière avantageuse, le dispositif d'acheminement comporte une ouverture débouchant de la surface de contact de la came et permet ainsi d'amener l'huile au plus près de la surface nécessitant une lubrification. L'amenée d'huile est donc faite de manière précise.

-le dispositif d'acheminement présente une forme en spirale.

De manière avantageuse, le dispositif présente une forme en spirale pour améliorer la vitesse d'écoulement de l'huile sur la paroi latérale.

-le dispositif d'acheminement est formé par une rainure creusée dans la paroi latérale de la came en regard avec l'orifice d'éjection.

De manière avantageuse, le dispositif d'acheminement est formé par une rainure creusée dans la paroi latérale de la came, ce qui réduit le poids de la came et donc du moteur.

-le dispositif d'acheminement est formé par une boursouflure s'étendant depuis la paroi latérale.

De manière avantageuse, le dispositif d'acheminement est formé par une boursouflure s'étendant depuis la paroi latérale, ce qui est facile à réaliser. Ladite boursouflure peut être obtenue par moulage et fixée par soudage à la paroi de la came.

### Brève description des figures

D'autres caractéristiques et avantages de l'invention apparaîtront à la lecture de la description détaillée de modes particuliers de réalisation de l'invention donnés à titre d'exemples non limitatifs et représentés sur les dessins annexés, dans lesquels:
-la figure 1 est une vue de coupe transversale représentative d'un arbre à cames avec un d'actionnement de soupape.
-la figure 2 représente une vue schématique de coupe transversale de l'arbre à cames avec le dispositif d'actionnement des soupapes et le dispositif de lubrification d'une came et d'un linguet selon l'invention.
La figure 3 représente une vue schématique longitudinale d'une partie d'un arbre à cames.
La figure 4 représente une vue schématique longitudinale d'une partie d'un arbre à cames.

### Description détaillée des figures

Dans la description qui va suivre, des chiffres de référence identiques désignent des pièces identiques ou ayant des fonctions similaires.

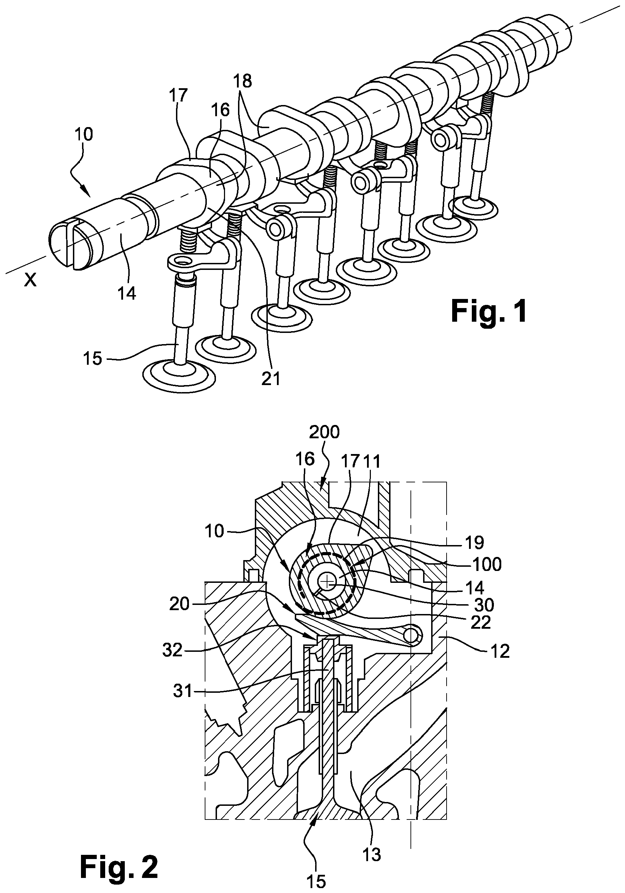

Comme représenté dans les figures 1 et 2, un dispositif d'actionnement 10 de soupapes est disposé dans une chambre 11 dans une culasse 12 de moteur thermique (non représenté) pour assurer la transmission du mouvement rotatif d'un arbre à cames 14 à des soupapes 15 et engendrer un coulissement desdites soupapes selon leur axe pour ouvrir un conduit 13 d'air ou de gaz.

De manière connue, un arbre à cames 14 est monté dans la chambre 11, mobile en rotation et entrainé par une rotation de vilebrequin (non représenté) grâce à des éléments de transmission tel qu'une chaîne avec des roues dentées (non représentés). Ledit arbre à cames porte plusieurs cames 16 montées solidaires en rotation dudit arbre. Les cames 16 comportent une excentricité et viennent appuyer sur une tige 31 de la soupape 15. Un linguet 20 est mis entre la came 16 et la soupape 15 pour assurer la transmission des mouvements. Selon la figure 2, la came 16 vient appuyer par une surface de contact 17 comprise entre deux parois latérales 18 qui 'étendent radialement depuis un contact avec l'arbre à cames au pied 21 de ladite came, sur une tête du linguet 20 qui appuie ensuite sur une extrémité libre 32 de la tige 31 de la soupape 15.

Il convient donc d'assurer la lubrification de la surface de contact 17 de la came 15 avec le linguet 20.

L'invention propose un dispositif de lubrification 100 de la surface de la came 16 qui vient en contact avec un linguet 20 lors de la rotation de l'arbre à cames 14.

Selon la figure 2, l'arbre à cames 14 comporte un conduit d'amenée 30 d'huile connecté à une rampe d'alimentation d'huile (non représentée) pour amener de l'huile qui est ensuite projetée au travers d'un orifice radial 22 d'éjection creusé dans la paroi de l'arbre à cames. L'huile projetée permet de lubrifier les paliers qui maintiennent l'arbre à cames dans la chambre 11.

L'orifice d'éjection est disposé entre deux cames, chacune des cames présente une paroi latérale en regard avec ledit trou d'éjection. De l'huile peut s'écouler également depuis l'orifice et longer l'arbre à cames entre deux cames.

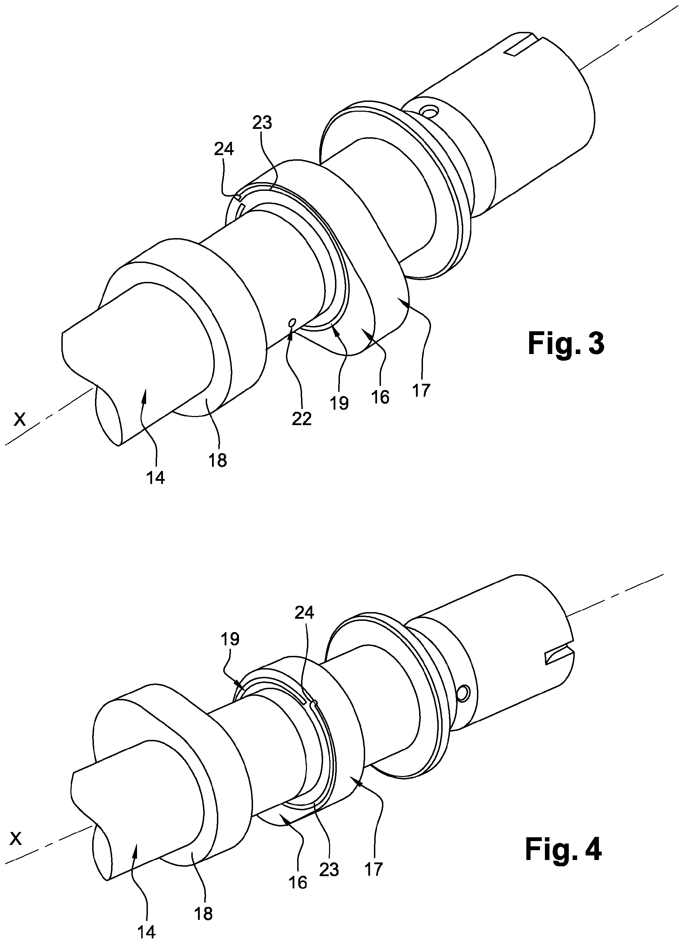

Tel que représenté en figures 3 et 4, selon un mode de réalisation préféré, la came 16 comporte un dispositif d'acheminement 100 pour collecter de l'huile coulant le long de l'arbre 14 à cames et contre la came 16 et l'amener vers la surface de contact 17 de la came avec le linguet. Le dispositif d'acheminement 100 comprend une cavité 19 de collecte de l'huile. Tel que représenté, ladite cavité 19 de collecte est formée par une rainure 23 creusée dans la paroi latérale et présentant une forme en spirale entourant l'arbre 14. Ladite rainure en spirale comporte une extrémité 24 débouchant dans la surface de contact 17 de la came. De manière préférentielle ladite extrémité débouche dans la surface de contact 17 de la came du côté où la came présente une moindre excentricité afin de faciliter le passage d'huile depuis la rainure 23 vers la surface de contact.

Selon un autre mode de réalisation non représenté, le dispositif d'acheminement 100 comporte une boursoufflure s'étendant depuis la paroi latérale 18 selon l'axe de la came confondu avec l'axe de l'arbre à cames. Ladite boursouflure entoure ledit arbre et est enroulé en spirale autour de l'arbre. La boursouflure peut comporter une extrémité dirigée vers la surface de contact pour amener l'huile sur ladite surface. La cavité de collecte est ainsi formée par la paroi latérale 18 délimitée par la boursouflure en spirale. La boursouflure peut être obtenue par moulage ou matriçage puis soudage sur la paroi latérale.

Lors du fonctionnement du moteur, l'arbre à cames 14 est mis en rotation et la came 16 vient en appui sur le linguet 20 par la surface de contact 17 et pousser une tête de contact dudit linguet 20 en direction de la soupape 15. Le linguet 20 est alors entrainé en pivotement autour de l'axe de pivot X1 parallèle à l'axe longitudinal X pour permettre la transmission de l'effort d'appui sur la tête 32 de la tige 31 de soupape. Ladite tige 31 de soupape est poussée en coulissement vers la chambre du cylindre pour obtenir une ouverture du conduit de gaz. La came 14 relâche ensuite le contact avec le linguet 20. Les ressorts de rappel de la soupape vont alors repousser la tige 31 de soupape dans le sens opposé contre la tête de contact du linguet contre la came.

De l'huile est acheminée par le conduit d'amenée 30 dans l'arbre à cames 14 et ressort par l'orifice radial 22. Ladite huile est projetée depuis l'orifice d'éjection et vient couler le long de l'arbre 14. Par l'effet des forces centrifuges, l'huile va glisser le long de la paroi latérale 18 et être recueillie dans la cavité 19 de collecte. Ensuite elle est dirigée vers l'extrémité 24 du dispositif d'acheminement pour venir sur la surface de contact 17 de came.

L'objectif de l'invention est atteint : le dispositif de lubrification permet d'assurer de manière simple et peu couteuse l'acheminement de l'huile sur la surface de contact 17 de la came avec le linguet. L'orifice de projection est percé pour la lubrification des paliers de maintien de l'arbre à cames, ce qui réduit davantage le coût de réalisation de ce dispositif.

Comme il va de soi, l'invention ne se limite pas aux seules formes d'exécution de cette prise, décrites ci-dessus à titre d'exemples, elle en embrasse au contraire toutes les variantes comprises dans la portée des revendications.

## Revendications

1. Dispositif de lubrification (200) d'une surface de contact (17) d'une came (16) fixée solidaire en rotation d'un arbre à cames (14) monté mobile en rotation d'un moteur thermique de véhicule automobile, ledit arbre comportant un conduit (30) d'alimentation d'huile longitudinal ainsi qu'un orifice radial d'éjection (22), tel que la came présente une paroi latérale (18) en regard avec l'orifice d'éjection (22) comportant une cavité de collecte (19) d'huile, **caractérisé en ce que** la cavité de collecte d'huile présente un débouché dans la surface de contact (17) pour diriger l'huile sur la paroi (18) de la came jusqu'à la surface de contact (17).

2. Dispositif (200) selon la revendication 1, **caractérisé en ce que** la cavité de collecte (19) entoure l'arbre à cames (14).

3. Dispositif (200) selon l'une quelconque des revendications 1 ou 2, **caractérisé en ce que** la cavité de collecte (19) comporte une ouverture (24) débouchant dans la surface de contact (17).

4. Dispositif (200) selon l'une quelconque des revendications 1 à 3, **caractérisé en ce que** la cavité de collecte (19) présente une forme en spirale.

5. Dispositif (200) selon l'une quelconque des revendications 1 à 4, **caractérisé en ce que** la cavité de collecte (19) est formée par une rainure (23) creusée dans la paroi latérale (18) de la came en regard avec l'orifice d'éjection (22).

6. Dispositif selon l'une quelconque des revendications 1 à 4, **caractérisé en ce que** la cavité de collecte est formée par une boursouflure s'étendant depuis la paroi latérale (18).

7. Arbre à cames (14) comportant une came (16) avec un dispositif de lubrification (100) selon l'une quelconque des revendications 1 à 6.

8. Moteur thermique de véhicule automobile comportant un arbre à cames (14) selon la revendication 7.

## Patentansprüche

1. Vorrichtung (200) zum Schmieren einer Kontaktfläche (17) eines Nockens (16), der drehfest mit einer drehbeweglich montierten Nockenwelle (14) eines Kraftfahrzeugverbrennungsmotors verbunden ist, wobei die Welle eine Längsölversorgungsleitung (30) sowie eine radiale Ausstoßöffnung umfasst, so dass der Nocken eine Seitenwand (18) gegenüber der Ausstoßöffnung (22) aufweist, die einen Ölaufnahmehohlraum (19) umfasst, **dadurch gekennzeichnet, dass** der Ölaufnahmehohlraum eine Mündung in der Kontaktfläche (17) zum Leiten des Öls auf die Wand (18) des Nockens bis zu der Kontaktfläche (17) aufweist.

2. Vorrichtung (200) nach Anspruch 1, **dadurch gekennzeichnet, dass** der Aufnahmehohlraum (19) die Nockenwelle (14) umgibt.

3. Vorrichtung (200) nach einem der Ansprüche 1 oder 2, **dadurch gekennzeichnet, dass** der Aufnahmehohlraum (19) eine in der Kontaktfläche (17) mündende Öffnung (24) umfasst.

4. Vorrichtung (200) nach einem der Ansprüche 1 bis 3, **dadurch gekennzeichnet, dass** der Aufnahmehohlraum (19) eine Spiralform aufweist.

5. Vorrichtung (200) nach einem der Ansprüche 1 bis 4, **dadurch gekennzeichnet, dass** der Aufnahmehohlraum (19) durch eine in der Seitenwand (18) des Nockens gegenüber der Ausstoßöffnung (22) ausgenommene Nut gebildet ist.

6. Vorrichtung (200) nach einem der Ansprüche 1 bis 4, **dadurch gekennzeichnet, dass** der Aufnahmehohlraum durch eine Ausbauchung gebildet ist, die sich von der Seitenwand (18) erstreckt

7. Nockenwelle (14), die einen Nocken (16) mit einer Schmiervorrichtung (100) nach einem der Ansprüche 1 bis 6 umfasst.

8. Kraftfahrzeugverbrennungsmotor, der eine Nockenwelle (14) nach Anspruch 7 umfasst.

## Claims

1. Device (200) for lubricating a contact surface (17) of a cam (16) secured so as to rotate as one with a rotatably mounted camshaft (14) of a combustion engine of a motor vehicle, said shaft comprising a longitudinal oil supply duct (30) and a radial ejection orifice (22), in such a way that the cam has a lateral wall (18) facing the ejection orifice (22) comprising an oil collection cavity (19), **characterized in that** the oil collection cavity has an opening in the contact surface (17) so as to direct the oil onto the wall (18) of the cam as far as the contact surface (17).

2. Device (200) according to Claim 1, **characterized in that** the collection cavity (19) surrounds the camshaft (14).

3. Device (200) according to either one of Claims 1 and 2, **characterized in that** the collection cavity (19) comprises an opening (24) that opens onto the contact surface (17).

4. Device (200) according to any one of Claims 1 to 3, **characterized in that** the collection cavity (19) has a spiral shape.

5. Device (200) according to any one of Claims 1 to 4, **characterized in that** the collection cavity (19) is formed by a groove (23) created in the lateral wall (18) of the cam, facing the ejection orifice (22).

6. Device according to any one of Claims 1 to 4, **characterized in that** the collection cavity consists of a blister extending from the lateral wall (18).

7. Camshaft (14) comprising a cam (16) having a lubrication device (100) according to any one of Claims 1 to 6.

8. Heat engine for a motor vehicle, comprising a camshaft (14) according to Claim 7.
